# EUROPEAN PATENT APPLICATION

(11) **EP 3 543 735 A1**
(43) Date of publication of application: **25.09.2019**
(21) Application number: 16831698.2
(22) Date of filing: 18.11.2016
(51) Int. Cl.: G01S 13/88, G06K 19/06, G01S 7/48

(54) **CODED MATERIAL MEANS THAT ARE READ USING SENSITIVE SENSORS VIA RELATIVE MOVEMENT OF BOTH**

(71) Applicant: Auto Drive Solutions S.L., 28006 Madrid (ES)
(72) Inventor: BADOLATO MARTIN, Alejandro, 28006 Madrid (ES)
(74) Representative: Urizar Anasagasti, Jesus Maria
(86) International application number: PCT/IB2016/056951
(87) International publication number: WO 2018/091944

(57) **Abstract**

The invention refers to coded material means that are read by sensitive sensors through the relative displacement of both in a certain direction, where the sensor interrogates an area of the coded information medium located in a material environment being capable of extracting the necessary information by means of the distance from the sensor to the interrogated area of the medium where the information resides in the thickness of the interrogated area of the medium or the composition of the interrogated area of the medium or in the difference of materials of different dielectric constants.

## Description

### SUBJECT OF THE INVENTION

The recommended invention refers to coded material means that are read by sensitive sensors through the relative displacement of both in a certain direction.

The sensor interrogates a coded information area located in a material environment, being capable of extracting the necessary information by means of the distance from the sensor to the interrogated area of the medium where the information resides in the thickness of the interrogated area of the medium or the composition of the interrogated area of the medium or in the difference of materials of different dielectric constants.

The relative movement of the sensor with respect to the medium allows interrogating other areas of the medium and in this way the sensor is capable of decoding an encoded message on the situation and position.

These coded information media can be used, among other things, to determine the relative position of the sensor with respect to the coded medium or to identify that the coded medium has passed the sensor or vice versa and even numerical control.

### FIELD OF THE INVENTION

The field of the invention is that of the high technology industry of positioning and control of mobile objects, which can be applied preferably to the railway industry.

### BACKGROUND OF THE INVENTION

There is a history of devices that perform the information-reading function in a similar manner.

Among them, the inventor is also the inventor of the international patent PCT/ES2015/070378 where he describes as the codification medium a track-guide installed at the road level although optionally it can remain under a layer of asphalt treated with a layer of hydrophobic material with preferred dimensions of 1.5 cm width by 5 cm depth and where cavities are machined in its interior, with the preferred shape of the cavities being that of dihedrons since the planes of the dihedrons increase the reflected signal, thus facilitating its detection.

Furthermore, the same inventor has registered the international patent PCT/IB2016/051159 where it details other information media with the same purpose. These information-reading and coding systems have more applications where it is not necessary for the sensor to be installed on a moving object and the information that is encoded does not have as its only aim that of determining the relative position of the sensor with respect to the coded medium.

But in the case in which the sensor remains in a fixed position and the codification medium is the moving part of the system has not been resolved until now, and it is what the recommended invention manages to do.

No previous element is known by the inventor that incorporates the features of the present invention, or the benefits that it entails.

### DESCRIPTION OF THE INVENTION

The invention refers to coded material media that are read by sensitive sensors through the relative displacement of both in a certain direction.

The sensor interrogates a coded information area located in a material environment, being capable of extracting the necessary information by means of the distance from the sensor to the interrogated area of the medium where the information resides in the thickness of the interrogated area of the medium or the composition of the interrogated area of the medium or in the difference of materials of different dielectric constants.

The relative movement of the sensor with respect to the medium allows interrogating other areas of the medium and in this way the sensor is capable of decoding an encoded message on the situation and position.

These coded information media can be used, among other things, to determine the relative position of the sensor with respect to the coded medium or to identify that the coded medium has passed the sensor or vice versa and even numerical control.

The sensor interrogates an area of the material medium, being capable of extracting information determining the distance from the sensor to the interrogated area of the medium, the thickness of the interrogated area or the dielectric constant of the interrogated area of the medium, as long as the thickness of the medium is known.

The relative movement of the sensor with respect to the medium allows interrogating other areas of the medium and in this way the sensor is capable of decoding an encoded message.

These coded information media can be used, among other things, to determine the relative position of the sensor with respect to the coded medium or to identify that the coded medium has passed the sensor or vice versa.

The information is extracted by means of detecting the edges where the media change their dielectric constant or through the detection of the dielectric-metal edges, where the changes are detected by means of sensors as may be a radar device of high resolution or a similar detector.

These edges are interrogated by a sensor through pressure or electromagnetic waves, and by measuring the time that the waves take in returning to the sensor, it is possible to determine the distances in which the reflections are produced and in this way extract the information.

An example of application that arises from this reading and coding system is the identification of railway rolling stock that has incorporated a material with a certain shape and a radar installed in the infrastructure that interrogates the distance or thickness of a material.

The coded information allows identifying the object and its relative position with respect to the reading system as it passes since the object that contains the information presents protrusions of different heights or different thicknesses.

### PREFERRED REALIZATIONS OF THE INVENTION

The recommended invention refers to coded material media that are read by means of sensitive sensors through the relative movement of both in a certain course.

The sensor interrogates a coded information area located in a material environment, being capable of extracting the necessary information by means of the distance from the sensor to the interrogated area of the medium where the information resides in the thickness of the interrogated area of the medium or the composition of the interrogated area of the medium or in the difference of materials of different dielectric constants.

The relative movement of the sensor with respect to the medium allows interrogating other areas of the medium and in this way the sensor is capable of decoding an encoded message on situation and position.

These coded information media can be used, among other things, to determine the relative position of the sensor with respect to the coded medium or to identify that the coded medium has passed the sensor or vice versa.

Among the coded material media that are read by the sensitive sensors through the relative displacement of both, three preferred media can be differentiated:
X - The material medium constituted by a dielectric layer with staggered protrusions and dips which cause a characteristic electromagnetic reflection pattern depending on the distance, when the relative movement is done perpendicular to the axis of the wave propagation of the sensor, constituted by a radar that emits energy through pressure or electromagnetic waves.
   And where the dielectric layer with protrusions and dips is associated with the logic levels according to the following scheme:
   a) A distance to the medium of 20 cm is associated with logic level 0.
   b) A distance to the medium of 21 cm is associated with logic level 1.
   c) A distance to the medium of 22 cm is associated with logic level 'repeat bit', with its logic level being the same as the previous bit.
   d) A distance to the medium of 23 cm is associated with logic level Start and serves to identify the start of a group of bits.
   e) A distance to the medium of 24 cm is associated with logic level End and serves to identify the end of a group of bits.
Y - The material medium is constituted by a dielectric layer with staggered thicknesses which cause a characteristic electromagnetic reflection pattern when the movement is done in a direction perpendicular to the axis of the wave propagation of the sensor, constituted by a radar that emits energy through pressure or electromagnetic waves and where the dielectric layer is associated with the logic levels according to the following scheme:
   f) A thickness of 2 cm is associated with logic level 0.
   g) A thickness of 3 cm is associated with logic level 1.
   h) A thickness of 4 cm is associated with logic level 'repeat bit', with its logic level being the same as the previous bit.
   i) A thickness of 5 cm is associated with logic level Start and serves to identify the start of a group of bits.
   j) A thickness of 6 cm is associated with logic level End and serves to identify the end of a group of bits.
Z - The material medium is constituted by a dielectric layer with constant thickness which is composed by materials of different dielectric constants that bring about a characteristic electromagnetic reflection pattern when the movement is done in a direction perpendicular to the axis of the wave propagation of the sensor, constituted by a radar that emits energy through pressure or electromagnetic waves and where the dielectric layer is associated with the logic levels according to the following scheme:
   k) A layer of 3 cm with a dielectric constant 2 is associated with logic level 0.
   I) A layer of 3 cm with a dielectric constant 3 is associated with logic level 1.
   m) A layer of 3 cm with a dielectric constant 4 is associated with logic level 'repeat bit', with its logic level being the same as the previous bit.
   n) A layer of 3 cm with a dielectric constant 5 is associated with logic level Start and serves to identify the start of a group of bits.
   o) A layer of 3 cm with a dielectric constant 6 is associated with logic level End and serves to identify the start of a group of bits.

The radar transmits in the sufficient bandwidth to resolve the two edges of corresponding change of medium.

In a preferred realization and in the railway area, the sensor is situated in the tracks pointing towards the zenith and detects when a certain sequence has passed the sensor.

In the case that the information medium is found in another situation, the reading medium will be placed appropriately, whether in a lateral or upper position pointing downwards.

Having sufficiently described the nature of the invention, as well as the manner of putting it into practice, it shall be recorded that the previous indicated features represented in the attached drawings are susceptible to modifications in detail insofar as they do not alter their basic principles, established in the above paragraphs and summarized in the following claims.

## Claims

1. Coded material media that are read by sensitive sensors through the relative displacement of both in a certain direction independently of the relative speed of both **characterized by** being constituted by:
- Coded material media through their shape and/or composition.
- Sensitive sensors constituted by a radar that emits pressure or electromagnetic waves that read the material media according to the distance to some of the surfaces of the medium or to internal edges of change of dielectric constants of the media.

2. Coded material media that are read by sensitive sensors through the relative displacement of both in a certain direction according to claim 1 and **characterized by** the material medium presenting staggered protrusions and/or dips that bring about a characteristic reflection pattern depending on the distance when the relative movement is carried out in a direction perpendicular to the axis of wave propagation of the sensor constituted by a radar that emits energy through pressure or electromagnetic waves and where the dielectric layer is associated to logic levels according to the following scheme:
a) A distance to the medium of 20 cm is associated with logic level 0.
b) A distance to the medium of 21 cm is associated with logic level 1.
c) A distance to the medium of 22 cm is associated with logic level 'repeat bit', with its logic level being the same as the previous bit.
d) A distance to the medium of 23 cm is associated with logic level Start and serves to identify the start of a group of bits.
e) A distance to the medium of 24 cm is associated with logic level End and serves to identify the end of a group of bits.

3. Coded material media that are read by sensitive sensors through the relative displacement of both in a certain direction according to claim 1 and **characterized by** the material medium being constituted by a dielectric layer that presents different thicknesses in staggered form that that bring about a characteristic reflection pattern depending on the distance when the relative movement is carried out in a direction perpendicular to the axis of wave propagation of the sensor constituted by a radar that emits energy through pressure or electromagnetic waves and where the dielectric layer is associated to logic levels according to the following scheme:
f) A thickness of 2 cm is associated with logic level 0.
g) A thickness of 3 cm is associated with logic level 1.
h) A thickness of 4 cm is associated with logic level 'repeat bit', with its logic level being the same as the previous bit.
i) A thickness of 5 cm is associated with logic level Start and serves to identify the start of a group of bits.
j) A thickness of 6 cm is associated with logic level End and serves to identify the end of a group of bits.

4. Coded material media that are read by sensitive sensors through the relative displacement of both in a certain direction according to claim 1 and **characterized by** the material medium being constituted by a dielectric layer of constant thickness that is composed by materials of different dielectric constants that bring about a characteristic reflection pattern when the movement is done perpendicular to the axis of the wave propagation of the sensor, constituted by a radar that emits energy through pressure or electromagnetic waves and where the dielectric layer is associated with the logic levels according to the following scheme:
k) A layer of 3 cm with a dielectric constant 2 is associated with logic level 0.
I) A layer of 3 cm with a dielectric constant 3 is associated with logic level 1.
m) A layer of 3 cm with a dielectric constant 4 is associated with logic level 'repeat bit', with its logic level being the same as the previous bit.
n) A layer of 3 cm with a dielectric constant 5 is associated with logic level Start and serves to identify the start of a group of bits.
o) A layer of 3 cm with a dielectric constant 6 is associated with logic level End and serves to identify the start of a group of bits.
